# FASCICULE DE BREVET EUROPEEN

(11) **EP 0 547 986 B1**
(45) Date de publication et mention de la délivrance du brevet: **29.05.1996**
(21) Numéro de dépôt: 92430024.7
(22) Date de dépôt: 07.10.1992
(51) Int. Cl.: G01G 11/00, G01G 19/03

(54) **Dispositif pour peser en continu des objets transportés par un convoyeur**
Vorrichtung zum kontinuierlichen Wiegen von Gegenständen auf einem Fördersystem
Device for continuously weighing articles transported by a conveyor belt

(30) Priorité: 08.11.1991 FR 9114132
(43) Date de publication de la demande: 23.06.1993
(73) Titulaire: PAM - PROVENCALE D'AUTOMATION ET DE MECANIQUE, F-13531 Saint Remy de Provence (FR)
(72) Inventeur: Nouen, Gérard, F-13520 Maussane Les Alpilles (FR)
(74) Mandataire: Moretti, René

(56) Documents cités:
- EP-A- 0 273 313
- EP-A- 0 283 388
- GB-A- 2 097 544
- GB-A- 2 214 646

## Description

La présente invention a pour objet un dispositif pour peser pendant leur transfert des objets placés sur un convoyeur.

Le secteur technique de l'invention est celui relatif aux matériels et appareils de pesage, trouvant notamment leur application dans l'industrie.

L'objectif de la présente invention est de peser pendant leur transfert des objets déplacés par un convoyeur.

Le document EP-A1-283 388 décrit un dispositif pour peser pendant leur transfert, des objets placés sur le(s) brin(s) porteur(s) d'un convoyeur et comprenant une bascule comportant une embase et un plateau mobile, dont la bascule est rendue solidaire par son embase à un bâti fixe, qui comporte en outre des moyens pour la prise en charge et le transfert desdits objets, lesquels moyens sont constitués par une roue de pesage montée sur la bascule et comportant trois disques situés de part et d'autre du (ou des) brin(s) porteur(s) du convoyeur, et sont à un niveau légèrement supérieur à celui desdits brins pour enlever momentanément lesdits objets du convoyeur et les mettre en appui sur le plateau de la bascule, les peser pendant leur transfert, pour ensuite les remettre sur ledit convoyeur.

Dans un brevet antérieur FR.91 12203 (EP-A-534876 publié 31,3,93), la demanderesse a décrit une installation de remplissage de bouteilles de gaz liquide, dans laquelle on procède au remplissage des bouteilles remises dans le circuit de distribution, en tenant compte du reliquat qu'elles sont susceptibles de contenir, de manière à injecter, lors du remplissage. le complément de gaz déterminé en fonction de la quantité théorique préalablement définie en regard du poids nominal, d'une marge de sécurité et d'une tolérance pré-établie.

Une telle installation comporte un carrousel de remplissage et permet de réaliser l'injection du gaz dans les bouteilles en continu, de façon automatique et systématique. On conçoit dans ces conditions que le pesage les bouteilles doit être effectué lui aussi en continu dans le but de ne pas perturber le fonctionnement des différents postes que comporte ladite installation.

Le dispositif selon l'invention s'applique à cette installation, ou à toute autre, dans laquelle les ooligations de la production imposent un pesage en continu, d'objets de toutes natures.

L'objectif est atteint par un dispositif dans lequel lesdits moyens pour la prise en charge et le transfert desdits objets sont montés sur un châssis mobile relié au plateau de la bascule et comportent au moins deux bandes sans fin dont les tronçons des brins porteurs desdites bandes se déplacent dans la même direction et parallèlement au convoyeur, à proximité et au dessus de deux glissières longitudinales, sur lesquelles les brins porteurs des bandes s'appuient sous la charge desdits objets, lesquelles glissières sont fixées audit châssis mobile.

Dans un mode préférentiel de réalisation, lesdites handes sans fin sont enroulées chacune autour de deux poulies entraînées en rotation par des moyens moteur et montées aux extrémités dudit châssis mobile.

Avantageusement, lesdites glissières comportent à leur extrémité des rampes inclinées raccordées à un tronçon médian rectiligne, sensiblement horizontal, lesquelles bandes et rampes sont dans des plans qui recoupent le plan sur lequel se déplacent les objets mis sur le convoyeur et en ce que lesdites poulies tangentent un plan situé au-dessous du plan dans lequel sont lesdits tronçons médians des glissières, de manière à transférer lesdits objets : du convoyeur sur ledit châssis mobile et de celui-ci sur le convoyeur sans à-coups.

Afin de permettre le réglage des moyens de pesage, la bascule est fixée audit bâti par des piètements réglables en hauteur. Le châssis mobile encadre la bascule et comporte des vis de centrage mises en appui sur les flancs latéraux du plateau mobile de la bascule pour, d'une part, régler la position relative de la bascule et du châssis et d'autre part, solidariser ledit châssis audit plateau.

Ledit bâti fixe comporte des supports réglables en hauteur et sur lesquels le châssis mobile est mis en appui, pour permettre la mise en place ou le retrait de la bascule.

Plus particulièrement, ledit bâti comporte deux paires de supports montés sur des traverses disposées aux extrémités avant et arrière du bâti.

De préférence, les glissières comportent des joues latérales qui encadrent pour les guider lesdites bandes sans fin.

Le châssis mobile comporte des plaques/supports sur lesquelles sont montées des glissières, lesquelles plaques sont en appui sur le plateau mobile de la bascule, lesquelles glissières comportent chacune dans leur partie médiane au moins une entretoise qui les relie audit plateau mobile.

Le dispositif selon l'invention comporte en outre un chariot escamotable pour être déplacé transversalement audit bâti fixe et destiné à supporter la bascule en vue de sa mise en place ou de son retrait.

Le chariot comporte ainsi une structure composée de deux chandelles, à l'extrémité desquelles sont montées deux roues mises au contact du sol et des moyens de préhension pour déplacer le chariot.

Celui-ci comporte également au moins deux tiges reliées à sa structure et situées dans un même plan horizontal entre le bâti fixe et l'embase de la bascule.

Lesdites tiges sont d'une longueur au moins égale à la largeur de la bascule augmentée de la largeur dudit bâti fixe, de telle sorte que la bascule disposée sur lesdites tiges du chariot en vue de son retrait, puisse être totalement extraite du dispositif et être placée momentanément sur le côté du bâti et du convoyeur.

Le résultat de l'invention est le pesage en continu d'objets de toutes natures déplacés sur un convoyeur, de tels objets étant par exemple des bouteilles de gaz liquide mises dans le circuit d'une chaîne de remplissage automatique.

Les avantages et caractéristiques de l'invention ressortiront encore à la lecture de la description suivante d'un exemple de réalisation d'un dispositif de pesée en continu, en référence aux dessins annexés sur lesquels :
- la figure 1 est une vue en élévation du dispositif de pesage selon l'invention ;
- la figure 2 est une vue de dessus du dispositif de la figure 1 ;
- la figure 3 est une vue en coupe selon la ligne III-III de la figure 1 ;
- la figure 4 est une vue en coupe du dispositif selon la ligne IV-IV de la figure 1, dans son application au pesage et à l'identification de bouteilles de gaz liquide ;
- la figure 5 est une vue en coupe transversale d'une glissière qui équipe le châssis mobile du dispositif.

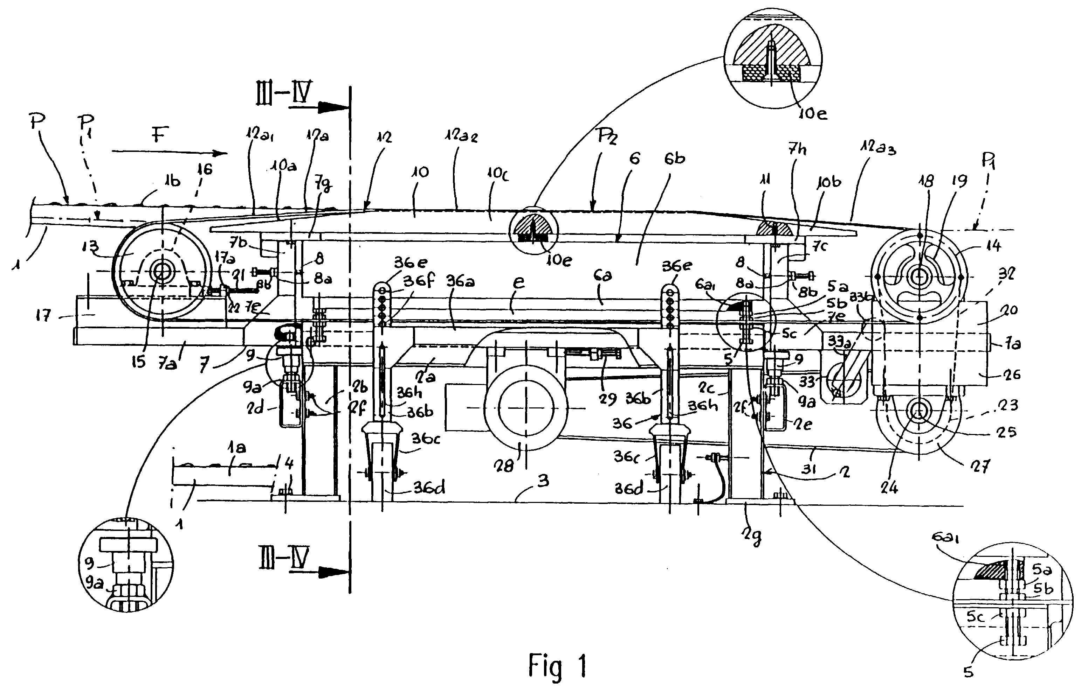

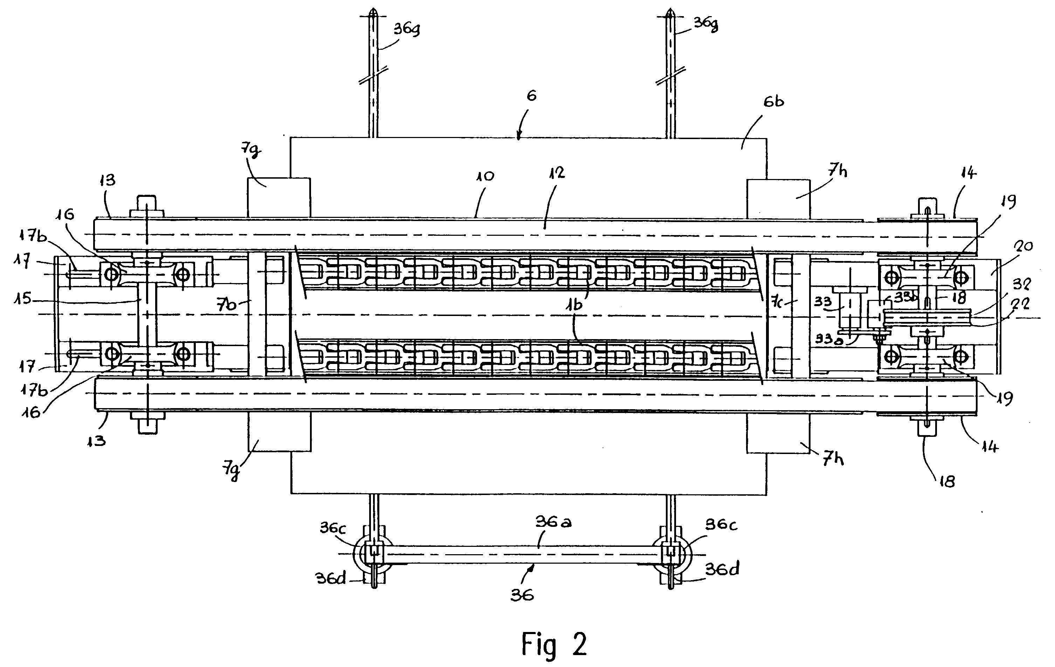

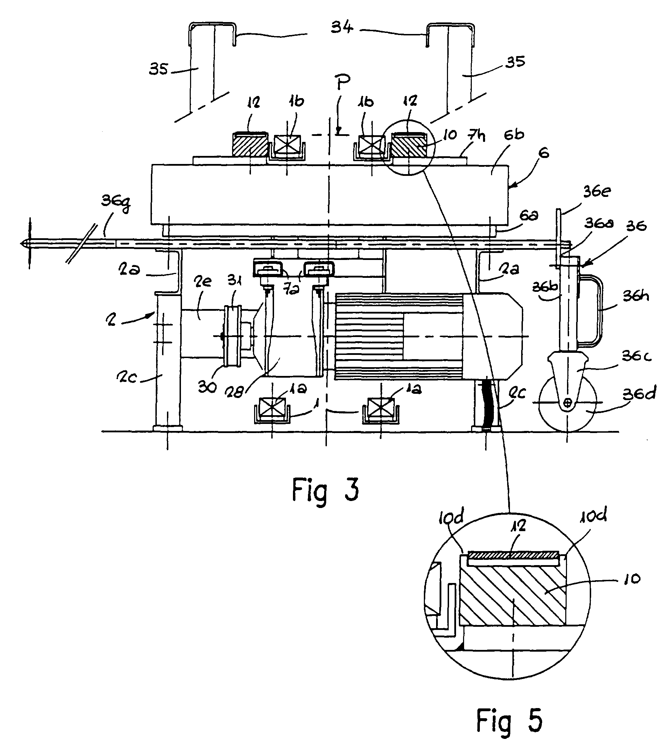

On se reporte d'abord aux figures 1 à 3. Le dispositif selon l'invention est situé sur le circuit d'un convoyeur, par exemple à chaînes 1, équipant une installation de transfert d'objets. Il se compose d'un bâti fixe 2 ancré dans le sol 3 au moyen de boulons d'ancrage 4 et comporte deux longerons 2a, par exemple soudés chacun à deux montants 2b/2c et deux traverses 2d/2e.

Les deux ensembles composés par les longerons 2a et les montants 2b/2c constituent deux supports en forme de portiques, lesquels sont reliés par lesdites traverses 2d/2e qui sont fixées par exemple au moyen de boulons 2f, auxdits montants 2b/2c.

Ledit bâti 2 encadre par ses montants 2c les brins "retour" la des chaînes du convoyeur 1. Les boulons d'ancrage sont passés dans des trous réservés dans des plaques de base 2g, soudées à la partie inférieure des montants 2b/2c.

Sur ce bâti 2 est montée une bascule 6 qui, de façon connue, se compose d'une embase 6a et d'un plateau mobile 6b. Ladite embase 6a comporte à ses angles et à sa partie extrême inférieure, quatre trous taraudés 6a₁, destinés à recevoir des piètements. Pour permettre de réaliser le réglage en hauteur et l'horizontabilité de la bascule 6, lesdits piètements sont réglables en hauteur et sont constitués par des vis 5 passées dans des orifices circulaires réservés dans l'aile supérieure des fers en C qui constituent lesdits longerons 2a du bâti. Chaque piètement comporte ainsi une vis 5, un écrou de blocage 5a de la vis dans l'embase 6a, un écrou-support 5b venant en appui sur l'aile supérieure du longeron 2a et un autre écrou de blocage 5c insérant avec l'écrou support 5b l'aile dudit longeron 2a. Le réglage en hauteur de la bascule 6 s'opère en agissant sur l'écrou 5b après déblocage et dévissage de l'écrou 5c. Après réglage, on bloque le système en agissant sur l'écrou 5c.

La bascule 6 supporte un châssis mobile 7 réalisé par mécano-soudure et comportant deux longerons 7a situés au-dessous de la bascule et s'étendant de part et d'autre du bâti 2, à l'avant et à l'arrière de celui-ci par rapport au sens de défilement F des chaînes du convoyeur 1. Ledit châssis 7 comporte deux supports 7b/7c qui encadrent la bascule 6. Le châssis mobile 7 comporte ainsi un support 7b situé dans sa partie avant, et un support 7c situé à sa partie arrière, lesquels supports constituent des traverses et sont reliés auxdits longerons 7a par des goussets 7e. Ledit châssis 7 comporte, à la partie supérieure desdites traverses 7b/7c, des plaques-supports 7g/7h qui recouvrent la bascule. Ces plaques-supports sont au nombre de quatre et sont fixées par soudure aux extrémités et perpendiculairement auxdites traverses 7b/7c. Elles réalisent ainsi la liaison du châssis mobile 7 et de la bascule 6 en étant en appui sur le plateau mobile 6b de cette dernière. Le centrage de la bascule par rapport à l'espace existant entre lesdites traverses 7b/7c du châssis mobile, est réalisé par des vis-pression 8 vissées dans lesdites traverses et mises au contact des flancs du plateau 6b. Chaque traverse comporte par exemple deux vis 8, lesquelles sont dotées d'un écrou de blocage en position 8a et d'un contre-écrou de serrage 8b.

Le bâti 2 comporte en outre des supports réglables 9 vissés dans lesdites traverses 2d/2e, lesquels supports sont par exemple au nombre de quatre, soit deux supports par traverse, et comportent un écrou de blocage 9a. Leur fonction est de supporter le châssis mobile lorsque l'on veut retirer la bascule 6 du dispositif. Un espace e réservé entre le bas de l'embase 6a et les longerons 2a du bâti, permet de dissocier la bascule 6 du châssis mobile 7.

En position de fonctionnement de l'ensemble, lesdits supports 9 sont éloignés des longerons 7a du châssis 7.

Celui-ci comporte en outre, à sa partie supérieure deux glissières 10 parallèles entre elles et aux chaînes du convoyeur 1, lesquelles glissières sont fixées au moyen de vis 11 passées dans des trous réservés dans lesdites plaques-supports 7g/7h. Une ou plusieurs entretoises 10e assurent la liaison glissière 10/bascule 6 dans la partie centrale du plateau 6a. Ces glissières sont réalisées en un matériau favorisant le glissement, par exemple en polytétrafluoréthylène ou similaire et comportent à leurs extrémités des rampes inclinées 10a/10b raccordées à un tronçon rectiligne médian 10c s'étendant sensiblement horizontalement et parallèlement aux brins porteurs 1b du convoyeur 1. Les tronçons 10a/10b/10c sont deux à deux dans un même plan. Lesdites glissières sont disposées sur le côté et à l'extérieur des brins porteurs 1b des chaînes du convoyeur et sont d'une hauteur telle que lesdits tronçons médians 10c sont situés légèrement au-dessus du plan P dans lequel se déplacent les objets mis en place sur lesdits brins porteurs 1b des chaînes. Au-dessus de ces glissières 10 sont montées des bandes sans fin 12, lesquelles s'enroulent sur des roues 13/14 situées aux extrémités avant et arrière du châssis mobile 7. Le dispositif comporte ainsi deux bandes 12 qui s'enroulent chacune autour de deux roues 13/14 et qui se déplacent au-dessus desdites glissières 10, dans la direction des brins porteurs 1b des chaînes du convoyeur. Lesdites bandes sont par exemple en élastomère antistatique et sont crantées pour coopérer avec les jantes plates crantées desdites roues 13/14 qui sont d'orientation sensiblement verticale.

Les roues 13 situées à l'avant du dispositif sont calées sur un arbre 15 et sont montées en rotation libre sur deux paliers à billes ou à rouleaux 16 déplaçables sur un support 17 fixé à l'extrémité avant desdits longerons 7a du châssis mobile 7.

Les roues 14 sont calées sur un arbre 18 monté sur deux paliers 19 fixé à un support 20 solidaire desdits longerons 7a, à l'extrémité arrière dudit châssis 7. La tension des bandes 12 est obtenue en agissant sur les roues avant 13. Le support 17 comporte à cet effet une patte 17a comportant un trou taraudé dans lequel se visse une vis de pression 21 mise en appui sur la semelle du palier 16. Le support 17 comporte deux lumières rectilignes 17b dans lesquelles sont passés les boulons de fixation desdits paliers 16. La tension des bandes 12 est donc obtenue en vissant lesdites vis de pression 21 pour déplacer les roues 13 dans le sens opposé à la position des roues 14. Lorsque la mise en tension des bandes 12 est effectuée, les vis sont bloquées au moyen d'un contre-écrou 21a et les boulons de fixation des paliers 16 sont serrés pour solidariser lesdits paliers au support 17.

Sur l'arbre 18 des roues 14, est également calée une poulie à gorge trapézoïdale 22, laquelle est montée entre lesdits paliers 19. A l'aplomb et dans le plan de cette poulie 22, se trouve une autre poulie à gorge trapézoïdale 23 calée sur un arbre 24, montée sur deux paliers 25 fixés à un support 26 solidaire desdits longerons 7a et situé au-dessous desdits longerons. Sur ledit arbre 24 est également calée une autre poulie 27 à gorge trapézoïdale.

Dans la partie centrale du châssis mobile 7 et au-dessous desdits longerons 7a est fixé un moto-réducteur 28, lequel est monté de la même façon que les paliers 16 pour pouvoir être déplacé sous l'effet de vis de pression 29. Sur l'arbre de sortie dudit moto-réducteur 28 est calée une poulie à gorge trapézoïdale 30 autour de laquelle s'enroule une courroie trapézoïdale 31 passée également autour de la poulie 27. La tension de la courroie 31 est obtenue par action sur les vis de pression 29. Après que la tension ait été effectuée, le moto-réducteur 28 est fixé sur son support.

Une autre courroie trapézoïdale 32 est enroulée autour desdites poulies 22/23 et dont la tension est réalisée au moyen d'un tendeur 33 relié au châssis 7 et comprenant par exemple un bras 33a soumis à l'action d'un ressort et d'un galet 33b. Un tel entraînement par moto-réducteur et transmission par courroie est classique et est ainsi suffisamment décrit pour permettre à l'homme du métier de le réaliser.

La position desdites roues 13/14 et leur diamètre sont tels qu'elles tangentent un plan P1 situé au-dessous et parallèlement au plan P2 dans lesquels sont lesdits tronçons médians 10c des glissières et sur lesquels tronçons se déplacent les bandes 12. Ainsi, chacun desdits brins porteurs 12a desdites bandes est divisé en trois parties que l'on décrira en fonction du sens de défilement des bandes : une première partie 12a₁ partant de la roue 13 et aboutissant à l'extrémité avant du tronçon médian 10c des glissières, une deuxième partie 12a₂ mise en appui sur ledit tronçon médian 10c, et une troisième partie 12a₃ partant de l'extrémité arrière dudit tronçon médian 10c et aboutissant à la roue 14.

La partie 12a₁ concourt avec la rampe 10a sur une ligne qui délimite l'extrémité avant du tronçon médian 10c. La partie 12a₃ concourt avec la rampe 10b sur une ligne qui délimite l'extrémité arrière dudit tronçon 10c. Ainsi les parties de bande 12a₁/12a₃ et les rampes 10a/10b sont dans des plans qui recoupent le plan P sur lequel se déplacent les objets mis sur les brins porteurs des chaînes 1b du convoyeur. La distance qui sépare lesdits plans P et P2 est de l'ordre de cinq millimètres.

Cette conception permet de transférer sans à-coups lesdits objets : du convoyeur 1 sur lesdites bandes 12/glissières 10, en vue de leur pesage.

Pour éviter que les bandes n'échappent aux glissières 10, celles-ci comportent des joues latérales 10d qui encadrent les bandes 12.

Les objets mis en circulation sur le convoyeur sont ainsi transférés sur ledit dispositif de pesage et sont pesés pendant leur parcours sur le tronçon médian 10c des glissières, qui sont reliées par le châssis 7 au plateau 6b de la bascule 6. La vitesse de défilement des bandes 12 peut être celle du défilement des chaînes 1b du convoyeur, ou être modulée en agissant sur les moyens de transmission et d'entraînement.

Les objets mis en circulation sur le convoyeur 1 et passant par le dispositif de pesage selon l'invention sont guidés par des rails 34 fixés à des montants 35 solidaires de la structure du convoyeur.

Ledit dispositif comporte en outre un chariot escamotable 36 pour être déplacé transversalement audit bâti fixe 2, lequel chariot a pour fonction de supporter la bascule 6 en vue de sa mise en place ou de son retrait, en cas de défaillance, ou encore pour permettre le remplacement d'une ou des bandes sans fin (12) à la suite de leur rupture ou d'une usure prononcée.

Ledit chariot 36 comporte une structure mécano-soudée comportant une traverse 36a aux extrémités de laquelle sont fixées deux chandelles de même hauteur 36b comportant chacune en partie basse une chape 36c, dans laquelle est montée à rotation libre une roue 36d. Ladite structure comporte en outre deux platines 36e qui prolongent vers le haut lesdites chandelles et qui comportent une série de trous 36f régulièrement espacés. Ces trous sont destinés à recevoir des tiges-supports qui ont pour fonction de supporter la bascule 6. Tel que représenté sur le dessin, le chariot comporte deux tiges 36g, cylindriques, qui sont passées dans le trou le plus bas de chacune des platines 36e, lesquelles tiges sont fixées à ladite structure par tout moyen connu. Par exemple, l'extrémité des tiges comporte un épaulement et est filetée pour recevoir un écrou de blocage.

Lesdites tiges 36g sont donc sensiblement parallèles entre elles et perpendiculaires à ladite structure mécano-soudée. Leur longueur est au moins égale à la largeur du bâti 2 augmentée de la largeur de la bascule 6, de telle sorte que celle-ci puisse être momentanément extraite et mise sur le côté du dispositif.

Pour ce faire, lesdites tiges 36g sont passées dans l'espace e existant entre l'embase 6a de la bascule et les longerons 2a du bâti 2. Pour extraire la bascule, on desserre d'abord les vis de centrage 8, on remonte les supports 9 jusqu'à les mettre au contact du châssis mobile 7 pour le faire supporter par lesdits supports, on démonte les piètements 5 et on fait reposer la bascule sur les deux tiges 36e du chariot 36. Celui-ci comporte des organes de préhension en forme d'anses 36h fixés aux chandelles. Le déplacement de la bascule est opéré en exerçant une traction sur lesdits organes 36h et en faisant glisser les tiges avec leur charge sur les longerons 2a du bâti. La remise en position de la bascule est réalisée en exerçant une poussée sur le chariot 36 jusqu'à ce que la bascule 6 soit positionnée à l'intérieur du châssis mobile 7. On remonte alors les piètements 5 en les vissant dans les trous taraudés de l'embase 6a et on règle la mise à niveau et la hauteur convenable au bon fonctionnement du dispositif.

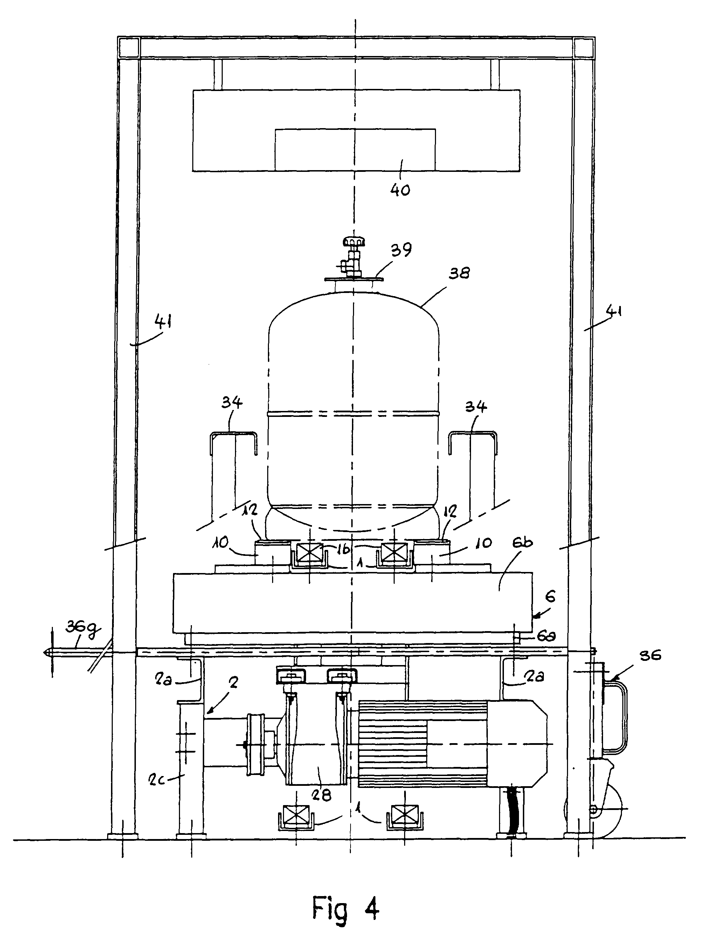

La figure 4 illustre en coupe le dispositif de pesée en continu selon l'invention, dans son application à une installation de remplissage de bouteilles de gaz liquide. Le dessin illustre une bouteille 38 prise en charge par lesdits moyens de pesée et en cours de pesage où la bouteille est dissociée des brins porteurs 1b des chaînes du convoyeur 1. Dans une telle installation, les informations portées sur une étiquette 39 fixée autour du col de la bouteille, sont lues par un lecteur, par exemple à faisceau laser 40, supporté par un châssis 41 fixé au sol et situé sur le trajet des bouteilles.

## Revendications

1. Dispositif pour peser pendant leur transfert des objets (38) placés sur le(s) brin(s) porteur(s) (1b) d'un convoyeur (1) et comprenant une bascule (6) comportant une embase (6a) et un plateau mobile (6b), dont la bascule est rendue solidaire par son embase à un bâti fixe (2), comportant des moyens (10/12) pour la prise en charge et le transfert desdits objets , lesquels moyens sont situés de part et d'autre du ou des brins porteurs du convoyeur (1) et sont à un niveau légèrement supérieur à celui des brins pour enlever momentanément lesdits objets (38) du convoyeur (1) et les mettre en appui sur le plateau de la bascule (6), les peser pendant leur transfert, pour ensuite les remettre sur ledit convoyeur,
caractérisé en ce que lesdits moyens pour la prise en charge et le transfert desdits objets sont montés sur un châssis mobile (7) relié au plateau (6b) de la bascule (6) et comportent au moins deux bandes sans fin (12) dont les tronçons (12a1/12a2/12a3) des brins porteurs desdites bandes se déplacent dans la même direction et parallèlement au convoyeur, à proximité et au dessus de deux glissières longitudinales (10), sur lesquelles les brins porteurs (12a) des bandes s'appuient sous la charge desdits objets (38), lesquelles glissières sont fixées audit châssis mobile (7).

2. Dispositif selon la revendication 1 dans lequel lesdites bandes sans fin (12) sont enroulées chacune autour de deux poulies (13/14) entraînées en rotation par des moyens moteur (28) et montées aux extrémités dudit châssis mobile (7).

3. Dispositif selon l'une quelconque des revendications 1 et 2, caractérisé en ce que lesdites glissières (10) comportent à leur extrémité des rampes inclinées (10a/10b) raccordées à un tronçon médian rectiligne (10c), sensiblement horizontal, lesquelles bandes (12) et rampes (10a/10b) sont dans des plans qui recoupent le plan (P) sur lequel se déplacent les objets (38) mis sur le convoyeur (1) et en ce que lesdites poulies (13/14) tangentent un plan (P1) situé au-dessous du plan (P2) dans lequel sont lesdits tronçons médians (10c) des glissières (10), de manière à transférer lesdits objets (38) : du convoyeur (1) sur ledit châssis mobile (7) et de celui-ci sur le convoyeur (1) sans à-coups.

4. Dispositif selon l'une quelconque des revendications 1 à 3, caractérisé en ce que la bascule (6) est fixée audit bâti (2) par des piètements (5) réglables en hauteur, et que le châssis mobile (7) encadre la bascule (6) et comporte des vis de centrage (8) mises en appui sur les flancs latéraux du plateau mobile (6b) de la bascule pour, d'une part, régler la position relative de la bascule (6) et du châssis (7) et d'autre part, solidariser ledit châssis audit plateau (6a).

5. Dispositif selon l'une quelconque des revendications 1 à 4, caractérisé en ce que ledit bâti fixe (2) comporte des supports réglables en hauteur (9) et sur lesquels le châssis mobile (7) est mis en appui, pour permettre la mise en place ou le retrait de la bascule (6).

6. Dispositif selon la revendication 5, caractérisé en ce que ledit bâti (2) comporte deux paires de supports (9) montés sur des traverses (2d/2e) disposées aux extrémités avant et arrière du bâti fixe (2).

7. Dispositif selon l'une quelconque des revendications 1 à 6, caractérisé en ce que lesdites glissières (10) comportent des joues latérales (10d) qui encadrent pour les guider lesdites bandes sans fin (12).

8. Dispositif selon l'une quelconque des revendications 1 à 7, caractérisé en ce que ledit châssis mobile (7) comporte des plaques/supports (7g) sur lesquelles sont montées des glissières (10), lesquelles plaques sont en appui sur le plateau mobile (6b) de la bascule (6).

9. Dispositif selon la revendication 8, caractérisé en ce que lesdites glissières (10) comportent chacune dans leur partie médiane au moins une entretoise (10e) qui les relie au plateau mobile (6b) de la bascule.

10. Dispositif selon l'une quelconque des revendications 1 à 9, caractérisé en ce qu'il comporte un chariot escamotable (36) pour être déplacé transversalement audit bâti fixe (2) et destiné à supporter la bascule (6) en vue de sa mise en place ou de son retrait.

11. Dispositif selon la revendication 10, caractérisé en ce que ledit chariot comporte une structure composée de deux chandelles (36b), à l'extrémité desquelles sont montées deux roues (36d) mises au contact du sol (3) et des moyens de préhension (36h) pour déplacer le chariot (36) et au moins deux tiges (36g) reliées à la structure du chariot et situées dans un même plan horizontal entre le bâti fixe (2) et l'embase (6a) de la bascule.

12. Dispositif selon la revendication 11, caractérisé en ce que lesdites tiges (36g) sont d'une longueur au moins égale à la largeur de la bascule (6) augmentée de la largeur dudit bâti fixe (2), de telle sorte que la bascule disposée sur lesdites tiges (36g) du chariot en vue de son retrait, puisse être totalement extraite du dispositif et placée momentanément sur le côté du bâti (2) et du convoyeur (1) en étant maintenue par ledit chariot (36) en appui d'une part, sur le sol (3) par ses chandelles (36b) et ses roues (36d) et d'autre part sur les longerons (2a) du bâti (2), par lesdites tiges (36g).

## Patentansprüche

1. Vorrichtung zum Wiegen von Gegenständen (38) während ihres Transports auf dem Förderband/den Förderbändern (1b) eines Förderers (1), die eine Waage (6) mit einem Unterteil (6a) und einer beweglichen Schale (6b) umfaßt, deren Waage über ihr Unterteil fest verbunden ist mit einem feststehenden Rahmen (2), umfassend Vorrichtungen (10/12) zur Aufnahme und Beförderung der Gegenstände, welche Vorrichtungen beidseits des Förderbands bzw. der Förderbänder des Förderers (1) angeordnet sind und sich auf einer Höhe befinden, die geringfügig über der der Förderbänder liegt, um die Gegenstände (38) kurzzeitig von dem Förderer (1) aufzunehmen und sie auf die Waagschale (6) zu legen, sie während ihres Transports zu wiegen und anschließend wieder auf dem Förderer abzulegen,
dadurch gekennzeichnet, daß die Vorrichtungen zum Aufnehmen und Fördern der Gegenstände auf einen beweglichen Rahmen (7) montiert sind, der mit der Schale (6a) der Waage (6) verbunden ist, und mindestens zwei Endlosbänder (12) aufweisen, deren Abschnitte (12a1/12a2/12a3) der Förderbänder der Bänder sich in die gleiche Richtung wie und parallel zu dem Förderer bewegen, und zwar nahe und über den Längsgleitschienen (10), auf denen die Förderbänder (12a) der Bänder unter dem Gewicht der Gegenstände (38) aufliegen, wobei diese Gleitschienen an dem beweglichen Rahmen (7) befestigt sind.

2. Vorrichtung nach Anspruch 1, bei der die Endlosbänder (12) jeweils um zwei Rollen (13/14) aufgerollt sind, die von Antriebsvorrichtungen (28) drehend angetrieben werden und an den Enden des beweglichen Rahmens (7) angeordnet sind.

3. Vorrichtung nach einem der Ansprüche 1 und 2, dadurch gekennzeichnet, daß die Gleitschienen (10) an ihrem Ende Schrägen (10a/10b) aufweisen, die mit einem mittleren, geraden, im wesentlichen horizontalen Teilstück (10c) verbunden sind, welche Bänder (12) und Schrägen (10a/10b) auf Ebenen angeordnet sind, welche die Ebene (P) schneiden, auf der sich die auf den Förderer (1) gelegten Gegenstände (38) bewegen, und dadurch, daß die Rollen (13/14) eine Ebene (P1) berühren, die über der Ebene (P2) liegt, auf der sich die Mittelstücke (10c) der Gleitschienen (10) befinden, so daß die Gegenstände (38) reibungslos vom Förderer (1) auf den beweglichen Rahmen (7) und von diesem auf den Förderer (1) befördert werden.

4. Vorrichtung nach einem der Ansprüche 1 bis 3, dadurch gekennzeichnet, daß die Waage (6) an dem Rahmen (2)) mittels höhenverstellbarer Gestelle (5) befestigt ist, und daß der bewegliche Rahmen (7) die Waage (6) einfaßt und Zentrierschrauben (8) umfaßt, die an den Seitenteilen der beweglichen Schale (6b) der Waage angelegt werden, um einerseits die Lage der Waage (6) zum Rahmen (7) zu regulieren und andererseits den Rahmen fest mit der Schale (6b) zu verbinden.

5. Vorrichtung nach einem der Ansprüche 1 bis 4, dadurch gekennzeichnet, daß der feste Rahmen (2) höhenverstellbare Träger (9) aufweist, auf denen der bewegliche Rahmen (7) aufliegt, um den Ein- oder Ausbau der Waage (6) zu ermöglichen.

6. Vorrichtung nach Anspruch 5, dadurch gekennzeichnet, daß der Rahmen (2) zwei Paar Träger (9) umfaßt, die auf Querträger (2d/2e) montiert sind, die am vorderen und hinteren Ende des festen Rahmens (2) angeordnet sind.

7. Vorrichtung nach einem der Ansprüche 1 bis 6, dadurch gekennzeichnet, daß die Gleitschienen (10) Seitenwangen (10d) aufweisen, welche die Endlosbänder (12) einfassen, um sie zu führen.

8. Vorrichtung nach einem der Ansprüche 1 bis 7, dadurch gekennzeichnet, daß der bewegliche Rahmen (7) Platten/Träger (7g) aufweist, auf welche Gleitschienen (10) montiert sind, welche Platten auf der beweglichen Schale (6b) der Waage (6) aufliegen.

9. Vorrichtung nach Anspruch 8, dadurch gekennzeichnet, daß die Gleitschienen (10) jeweils in ihrem Mittelbereich mindestens einen Abstandshalter (10e) umfassen, welcher sie mit der beweglichen Schale (6b) der Waage verbindet.

10. Vorrichtung nach einem der Ansprüche 1 bis 9, dadurch gekennzeichnet, daß sie einen versenkbaren Wagen (36) aufweist, der sich quer zu dem festen Rahmen (2) bewegen soll und dazu bestimmt ist, die Waage (6) im Hinblick auf ihrem Ein- und Ausbau zu tragen.

11. Vorrichtung nach Anspruch 10, dadurch gekennzeichnet, daß der Wagen einen Aufbau umfaßt, der aus zwei Stützen (36b) besteht, an deren Ende zwei Räder (36d) montiert sind, die den Boden (3) berühren, sowie Greifvorrichtungen (36h) zum Verschieben des Wagens (36) und mindestens zwei Stangen (36g), die mit dem Wagenaufbau verbunden sind und zwischen dem festen Rahmen (2) und dem Unterteil (6a) der Waage auf der gleichen horizontalen Ebene angeordnet sind.

12. Vorrichtung nach Anspruch 11, dadurch gekennzeichnet, daß die Länge der Stangen (36g) mindestens der Breite der Waage (6) zuzüglich der Breite des festen Rahmens (2) entspricht, in der Weise, daß die auf den Stangen des Wagens (36g) im Hinblick auf ihren Ausbau angeordnete Waage völlig aus der Vorrichtung herausgenommen werden und vorübergehend auf der Seite des Rahmens (2) und des Förderers (1) abgelegt werden kann, indem sie von dem Wagen (36) gehalten wird, der einerseits mit seinen Stützen (36b) und seinen Rädern (36d) auf dem Boden (3) und andererseits mit den Stangen (36g) auf den Längsträgern (2a) des Rahmens (2) aufliegt.

## Claims

1. Device for weighing, during their transfer, objects (38) placed on the carrying end or ends (1b) of a conveyor (1), said device comprising scales (6) having a base (6a) and a mobile plate (6b), the scales being fast via their base with a fixed frame (2), comprising means (10/12) for picking up and transferring said objects, which means are situated on each side of the carrying end or ends of the conveyor (1) and are situated at a slightly higher level than that of the ends for temporarily removing said objects (38) from the conveyor (1) and placing them in resting contact on the plate of the scales (6), and then weighing them during their transfer and replacing them on said conveyor, characterized in that said means for picking up and transferring said objects are mounted on a mobile frame (7) joined to the platform (6b) of the scales (6) and comprise at least two endless belts (12) of which the sections (12a1/12a2/12a3) of the carrying ends of said belts move in the same direction and in parallel to the conveyor, proximate to and above two longitudinal slides (10), on which the carrying ends (12a) of the belts rest under the load of said objects (38), said slides being fixed to said mobile frame (7).

2. Device according to claim 1 in which said endless belts (12) are each wound around two pulleys (13/14) driven in rotation by drive means (28) and mounted on the ends of said mobile frame (7).

3. Device according to any one of claims 1 and 2, characterized in that said slides (10) are provided on their end with inclined ramps (10a/10b) joined to a rectilinear median section (10c), which is substantially horizontal, said belts (12) and ramps (10a/10b) being inside planes which cut through the plane (P) on which the objects (38) placed on the conveyor (1) move, and in that said pulleys (13/14) are tangential to a plane (P1) situated beneath the plane (P2) in which are situated said median sections (10c) of the slides (10), so as to transfer said objects (38): from the conveyor (1) onto said mobile frame (7) and from the latter onto the conveyor (1) without any jolts.

4. Device according to any one of claims 1 to 3, characterized in that the scales (6) are fixed to said frame (2) via underframes (5) which are adjustable in height and in that the mobile frame (7) surrounds the scales (6) and comprises centering screws (8) which are placed in resting contact on the lateral edges of the mobile platform (6b) of the scales in order, on the one hand, to adjust the relative position of the scales (6) and the frame (7) and, on the other hand, to fasten said chassis to said platform (6b).

5. Device according to any one of claims 1 to 4, characterized in that said fixed frame (2) comprises supports (9), adjustable in height and on which the mobile frame (7) is placed in resting contact, in order to allow the positioning or removing of the scales (6).

6. Device according to claim 5, characterized in that said frame (2) comprises two pairs of supports (9) mounted on crosspieces (2d, 2e) placed on the front and rear end portions of the fixed frame (2).

7. Device according to any one of claims 1 to 6, characterized in that said slides (10) comprise lateral flanges (10d) which frame said endless belts (12) for guiding them.

8. Device according to any one of claims 1 to 7, characterized in that said mobile frame (7) comprises plates/supports (7g) on which slides (10) are mounted, said plates resting on the mobile platform (6b) of the scales (6).

9. Device according to claim 8, characterized in that each one of said slides (10) comprises in its median part, at least a cross-strut (10e) which connects it to the mobile platform (6b) of the scales.

10. Device according to any one of claims 1 to 9, characterized in that a retractable carriage (36) in order to be moved transversely to said fixed frame (2), which carriage is intended for supporting the scales (6) for positioning or removing purposes.

11. Device according to claim 10, characterized in that said carriage comprises a structure composed of two stays (36b), on the end of which are mounted two wheels (36d) placed in contact with the ground (3) and gripping means (36h) for moving the carriage and at least two rods (36g) connected to the structure of the carriage and situated inside the same horizontal plane between the fixed frame (2) and the base (6a) of the scales.

12. Device according to claim 11, characterized in that said rods (36g) have a length at least equal to the width of the scales (6) increased by the width of said fixed frame (2), such that the scales which are placed on said rods (36g) of the carriage for the purpose of removing them, can be entirely extracted from the device and temporarily placed on the side of the frame (2) and of the conveyor (1) while being held by said carriage (36) in resting position, on the other hand, on the ground (3) via its stays (36b) and its wheels (36d), and on the other hand, on the beams (2a) of the frame (2), via said rods (36g).
